Europäisches Patentamt

European Patent Office

Office européen des brevets

(19)

(11) Numéro de publication: **0 053 529**
**B1**

(12) ## FASCICULE DE BREVET EUROPEEN

(45) Date de publication du fascicule du brevet:
08.08.84

(51) Int. Cl.³: **B 60 J 3/02**

(21) Numéro de dépôt: 81401747.1

(22) Date de dépôt: 30.10.81

(54) Charnière d'articulation de pare-soleil.

(30) Priorité: 02.12.80 FR 8025542

(43) Date de publication de la demande:
09.06.82 Bulletin 82/23

(45) Mention de la délivrance du brevet:
08.08.84 Bulletin 84/32

(84) Etats contractants désignés:
DE GB IT SE

(56) Documents cités:
GB - A - 2 034 397
US - A - 2 201 377
US - A - 2 279 648
US - A - 3 383 132

(73) Titulaire: COMPAGNIE INDUSTRIELLE DE
MECANISMES en abrégé C.I.M. Société dite:, 6, Rue
Barbès, F-92302 Levallois-Perret (FR)

(72) Inventeur: Criton, Eugène, 3 Place Manie,
F-78600 Maisons Lafitte (FR)
Inventeur: Dieudonne, Jean-Pierre, Chemin du Levot
Fresse sur Moselle, F-88160 Le Thillot (FR)
Inventeur: Vigo, Gilles, 62 Le Riffin, F-88360 Rupt sur
Moselle (FR)

(74) Mandataire: Polus, Camille et al, c/o Cabinet
Lavoix 2, Place d'Estienne d'Orves, F-75441 Paris
Cedex 09 (FR)

BUNDESDRUCKEREI BERLIN

**Description**

La présente invention est relative aux charnières d'articulation de pare-soleil, notamment pour véhicules automobiles, du type comprenant un corps de charnière de forme générale en U délimitant un palier pour un bras de support et un logement pour un ressort à lame qui, au repos, fait saillie dans le palier, ce logement comportant des parois qui assurent la retenue latérale du ressort.

On sait que les charnières de ce type permettent théoriquement d'assurer une ou plusieurs positions stables du pare-soleil, notamment en position relevée inactive, lorsque le ressort à lame attaque un méplat du bras de support du pare-soleil.

Cependant, cet effet de placage est très peu utilisé sur le plan industriel car les agencements proposés capables d'assurer cet effet de façon fiable et répétée sont relativement difficiles à fabriquer et d'un prix de revient trop élevé (voir par exemple le brevet US 2 279 648).

L'invention a pour but de fournir une charnière facile à réaliser et possédant malgré un coût réduit des perfomances élevées, notamment pour l'effet de placage.

A cet effet, l'invention a pour objet une charnière du type précité, caractérisée en ce que ledit logement comporte des bossages de retenue du ressort dans au moins une des deux autres directions longitudinale et transversale, ces bossages étant dimensionnés de façon à pouvoir être franchis par le ressort par écartement élastique des deux branches du U.

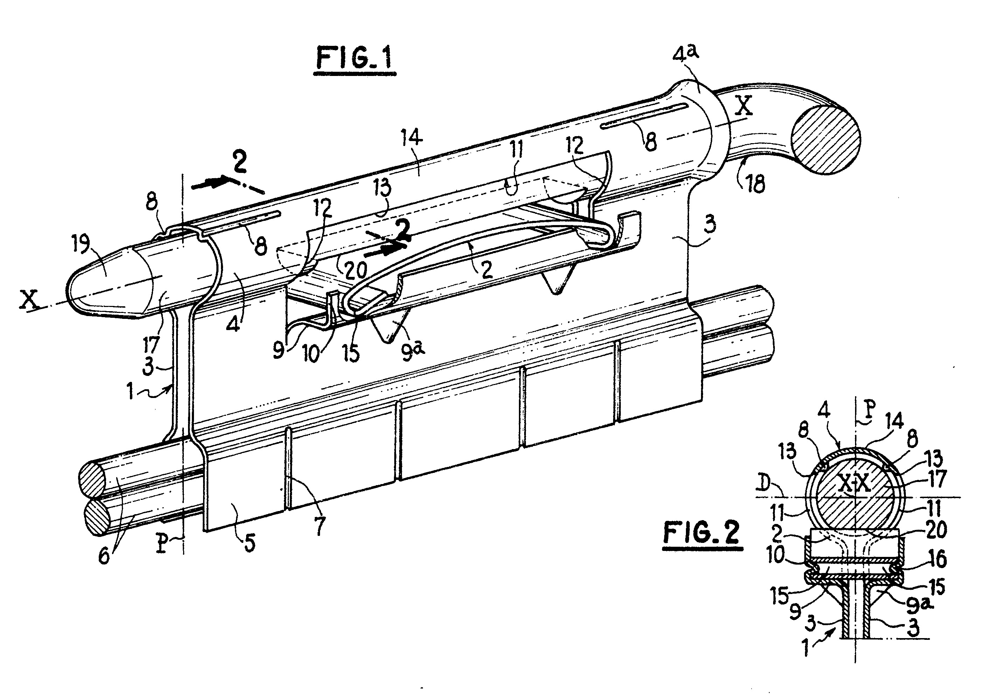

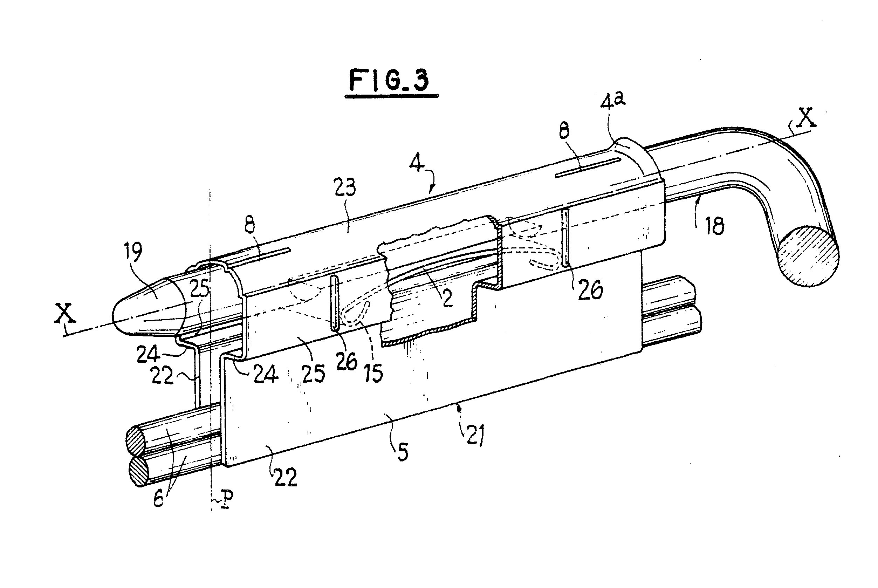

L'invention est exposée ci-après plus en détail à l'aide des dessins annexés, qui en représentent deux modes d'exécution donnés à titre d'exemple. Sur ces dessins: — la fig. 1 est une vue en perspective d'une charnière suivant un premier mode d'éxécution de l'invention montée sur un bras de support; — la fig. 2 est une vue partielle prise en coupe transversale suivant la ligne 2-2 de la fig. 1; et — la fig. 3 est une vue en perspective d'une charnière réalisée suivant un deuxième mode d'éxécution de l'invention.

La charnière représentée sur les fig. 1 et 2 est constituée d'un corps 1 et d'un ressort à lame 2.

Le corps 1 est réalisé à partir d'une tôle rectangulaire pliée, quoiqu'il puisse aussi être en matière plastique. Il comprend deux ailes latérales parallèles et voisines 3 reliées par une partie 4 à section circulaire formant palier. Pour la commodité de la description, on supposera le palier 4 situé à l'extrémité supérieure du corps 1, comme représenté, ce qui correspond à la position active abaissée du pare-soleil. Les ailes 3 sont alors à peu près verticales, l'axe X-X du palier 4 à peu près horizontal, et la charnière comporte un plan vertical P de symétrie.

Les parties inférieures libres 5 des ailes 3 sont décalées vers l'extérieur de façon que leur écartement mutuel accru permette le passage de l'armature filiforme 6 du pare-soleil. La fixation des parties 5 sur cette armature s'effectue par soudure à l'emplacement de nervures verticales 7 embouties dans ces parties 5.

Le long de deux génératrices voisines du plan P, le palier 4 comporte des nervures discontinues 8 comportant chacune un segment à chaque extrémité du corps 1.

Le corps 1 de la charnière délimite un logement pour le ressort 2 et ce logement est délimité du côté opposé au palier 4 par deux portions de surface 9 s'étendant dans le même plan et servant à l'appui du ressort 2. Comformément au premier mode d'éxécution de l'invention, ces portions de surface sont constituées par des languettes 9, dont le développement est rectangulaire et qui sont découpées dans chaque aile 3 le long de trois de leurs côtés es rabattues vers l'extérieur autour de leur quatrième côté, qui est leur grand côté inférieur. La longueur de chaque languette couvre à peu près la distance séparant les deux segments des nervures 8. La languette est rabattue à angle droit, c'est-à-dire horizontalement, et son extrémité libre est repliée vers le haut pour former un rebord longitudinal vertical 10.

Il est prévu des nervures $9^a$ de rigidification des languettes 9 qui ont une forme en coin et s'étendent sous les languettes entre la partie plane de celles-ci et les ailes 3.

Chaque languette 9 laisse dans le corps 1 une fenêtre 11 qui, vue de face, est rectangulaire. Les deux petits côtés 12 de cette fenêtre partent d'une région intermédiaire de l'aile 3 et s'étendent vers le haut jusqu'à un niveau situé un peu au-dessus du diamètre horizontal D (fig. 2) du palier 4 et un peu au-dessous de la nervure 8 correspondante. Ainsi, les grands côtés supérieurs 13 des deux fenêtres 11 sont séparés par une bande bombée 14 de la matière du corps 1, de sorte que, sur la largeur de cette bande, le palier 4 est continu sur toute sa longueur.

Le ressort 2, qui est par exemple en acier, a une section horizontale transversale à l'axe X-X du palier 4 (fig. 2) et une section longitudinale bombée en forme de voûte (fig. 1). Les extrémités de ce ressort sont recourbées vers le bas à 180° environ, de façon à définir deux crochets 15 à côtés à peu près parallèles.

La largeur du ressort 2 est légèrement inférieure à la distance séparant les rebords 10 (fig. 2), tandis que sa longueur au repos est inférieure à celle des fenêtres 11. Le ressort 2 peut facilement être inséré latéralement dans une de ces fenêtres pour venir en appui par ses extrémités sur la partie horizontale des languettes 9. Le ressort est alors positionné latéralement par les rebords 10 et, verticalement et longitudinalement, par quatre petits bossages ou picots 16 emboutis vers l'intérieur dans ces rebord au droit des boucles des crochets 15. Ces picots permettent la livraison du pare-soleil incorporant la charnière sans risque de perte du ressort.

Dans cette position de repos, la partie centrale du ressort 2 fait saillie dans le palier 4 à peu près au milieu de la longueur des fenêtres 11.

La charnière ainsi décrite et l'armature 6 sur laquelle elle est fixée sont noyées dans une masse de capitonnage recouverte d'un garnissage extérieur pour compléter le pare-soleil. Du côté considéré, la partie supérieure de ce pare-soleil comporte seulement un trou donnant accès à une extrémité 4ᵃ du palier 4, qui est évasée, tandis que le reste de la charnière est invisible et inaccessible.

Le palier 4 est destiné à s'enfiler sur une partie rectiligne 17 d'un bras de support coudé 18 métallique ou en matière plastique. Au-delà du coude, le bras 18 aboutit à un dispositif éventuellement articulé de fixation sur le pavillon d'un véhicule. La partie 17 a une section courante circulaire et un nez convergent et arrondi 19 et présente en son milieu un méplat 20 dont la longueur correspond à peu près à celle des fenêtres 11.

Lorsqu'on enfile le palier 4 sur le bras 18, le nez 19 de celui-ci attaque la partie centrale saillante du ressort 2 et la repousse vers le bas. Ceci produit un aplatissement du ressort, qui est permis par la faculté des crochets 15 de glisser longitudinalement sur les languettes 9 et par celle des picots 16 de se déplacer à l'intérieur de ces crochets.

Il est à noter qu'au cours de l'opération d'enfilage, le nez 19 trouve un guidage continu jusqu'à sa sortie du palier 4 grâce à la présence de la bande supérieure 14 de ce dernier, ce qui évite le risque de voir ce nez sortir par une fenêtre 11 et se coincer.

Lorsque le pare-soleil est en place, le bras 18 est en appui, en section transversale (fig. 2), par trois points répartis sur sa périphérie, deux de ces points correspondant aux quatre nervures 8 et le troisième à la génératrice supérieure du ressort 2. Lorsque c'est le méplat 20 qui est en regard du ressort 2, ce qui a été représenté au dessin mais correspond généralement à la position relevée du pare-soleil, le troisième point de contact devient bien entendu un segment de droite (fig. 2).

Il est facile de choisir la forme au repos et la matière du ressort 2 pour obtenir le couple de placage désiré dans cette dernière position. A ce couple de placage correspond un couple de rotation beaucoup plus faible dans les autres positions angulaires du pare-soleil.

Des essais faits par la demanderesse ont montré que la charnière possède des performances élevées du point de vue de l'effort exercé sur le bras 18 et que ces performances restent stables après un grand nombre de sollicitations du ressort 2.

On comprend que la charnière décrite ci-dessus peut facilement être modifiée pour s'adapter, avec un mode de fixation approprié, à tout autre type de pare-soleil.

Sur la fig. 3, les éléments analogues à ceux des fig. 1 et 2 portent les mêmes références. Dans ce cas, le corps 21 de la charnière comporte deux ailes latérales 22 reliées par une partie 23 en forme de voûte et de section circulaire. Dans ce corps est délimité un logement qui présente à peu près la forme d'un caisson dont la partie supérieure 23 en forme de voûte assure la fonction de palier. Ce logement est délimté, par ailleurs, par deux portions de surface 24 sur lesquelles vient s'appuyer le ressort à lame 2. Ces portions de surface sont raccordées à deux rebords latéraux respectifs 25. Ces derniers présentent chacun deux bossages longitudinaux verticaux 26 espacés l'un de l'autre d'à peu près la longueur du ressort à lame 2.

Comme la paroi supérieure 23 s'étend sur toute la longueur de la charnière, le palier 4 présente une grande rigidité. Par ailleurs, la mise en place du ressort est commode, car il suffit de le faire glisser longitudinalement dans le caisson du corps, le passage des bossages 26 étant permis par l'élasticité du corps. Après fixation des ailes 5 sur l'armature filiforme 6, par exemple par soudage, le ressort se trouve immobilisé dans toutes les directions.

## Revendications

1. Charnière d'articulation de pare-soleil, du type comprenant un corps de charnière (1) de form générale en U délimitant un palier (4) pour un bras de support (18) et un logement pour un ressort à lame (2) qui, au repos, fait saillie dans le palier, ce logement comportant des parois (10; 25) qui assurent la retenue latérale du ressort, caractérisée en ce que ledit logement comporte des bossages (16; 26) de retenue du ressort dans au moins une des deux autres directions longitudinale et transversale, ces bossages étant dimensionnés de façon à pouvoir être franchis par le ressort par écartement élastique des deux branches du U.

2. Charnière suivant la revendication 1, caractérisée en ce que lesdits bossages (16; 26) sont prévus dans lesdites parois de retenue latérale (10; 25).

3. Charnière suivant la revendication 2, caractérisée en ce que le ressort (2) est bombé.

4. Charnière suivant la revendication 3, caractérisée en ce que les extrémités du ressort sont recourbées en crochets (15), et en ce que lesdits bossages (16) sont des picots en saillie intérieure dans ces crochets.

5. Charnière suivant la revendication 3, caractérisée en ce que les deux branches de chaque crochet (15) sont à peu près parallèles.

6. Charnière suivant l'une quelconque des revendications 1 à 5, caractérisée en ce que ledit logement s'étend sur toute la longueur du corps (21) pour former un caisson allongé dont la paroi (23) opposée à des portions (24) d'appui du ressort (2) est courbe en formant ainsi une partie du palier (4).

7. Charnière suivant la revendication 6, caractérisée en ce que les parois latérales (25) du logement comportent chacune deux bossages (26) parallèles aux branches du U et assurant la retenue longitudinale du ressort (2).

8. Charnière suivant l'une quelconque des revendications 1 à 7, caractérisée en ce que le logement du corps (1; 21) est délimité du côté opposé au palier (4) par des portions de surface (9; 24) venues de formage dans le corps (1; 21), s'étendant vers l'extérieur dans un même plan et sur lesquelles le ressort à lame (2) s'appuie à glissement.

9. Charnière suivant la revendication 8, caractérisée en ce que lesdites portions de surface sont formées par des languettes (9) découpées et rabattues vers l'extérieur.

10. Charnière suivant la revendication 9, caractérisée en ce que les languettes (9) définissent dans le corps (1) deux fenêtres (11) dont les bords longitudinaux découpés (13) sont séparés par une bande (14) du corps.

**Patentansprüche**

1. Scharniergelenk für eine Sonnenblende mit einem im wesentlichen U-förmigen Scharnierkörper (1), welcher ein Lager (4) für einen Trägerarm (18) und einen Sitz für eine Blattfeder (2), die in der Ruhestellung in das Lager hineinragt, bildet, wobei der Sitz Wände (10; 25) zur seitlichen Halterung der Feder aufweist, dadurch gekennzeichnet, daß der Sitz Vorsprünge (16; 26) zur Halterung der Feder in Längs- und/oder Querrichtung enthält, welche so bemessen sind, daß sie von der Feder durch elastisches Spreizen der beiden Schenkel des U überwunden werden können.

2. Scharnier nach Anspruch 1, dadurch gekennzeichnet, daß die erwähnten Vorsprünge (16; 26) in den besagten seitlichen Halterungswänden (10; 25) vorgesehen sind.

3. Scharnier nach Anspruch 2, dadurch gekennzeichnet, daß die Feder (2) gewölbt ist.

4. Scharnier nach Anspruch 3, dadurch gekennzeichnet, daß die Enden der Feder zu Haken (15) umgebogen sind und daß die besagten Vorsprünge (16) Zäckchen sind, die in das Innere der Haken vorspringen.

5. Scharnier nach Anspruch 3, dadurch gekennzeichnet, daß die beiden Schenkel jedes Hakens (15) in etwa parallel sind.

6. Scharnier nach einem der Ansprüche 1 bis 5, dadurch gekennzeichnet, daß sich der besagte Sitz über die ganze Länge des Körpers (21) erstreckt und einen länglichen Kasten bildet, dessen den Auflagestellen (24) der Feder (2) gegenüberliegende Wand (23) gekrümmt ist und so einen Teil des Lagers (4) bildet.

7. Scharnier nach Anspruch 6, dadurch gekennzeichnet, daß die Seitenwände (25) des Sitzes jeweils zwei Vorsprünge (26) aufweisen, die parallel zu den Schenkeln des U sind und die Feder (2) in Längsrichtung halten.

8. Scharnier nach einem der Ansprüche 1 bis 7, dadurch gekennzeichnet, daß der Sitz des Körpers (1; 21) an der dem Lager (4) entgegengesetzten Seite durch Flächenteile (9; 24) begrenzt ist, die aus dem Körper (1; 21) geformt sind, sich in derselben Ebene nach außen erstrecken und auf denen die Blattfeder (2) gleitend aufliegt.

9. Scharnier nach Anspruch 8, dadurch gekennzeichnet, daß die genannten Flächenteile durch ausgeschnittene und nach außen umgebogene Zungen (9) gebildet sind.

10. Scharnier nach Anspruch 9, dadurch gekennzeichnet, daß die Zungen (9) im Körper (1) zwei Fenster (11) begrenzen, deren ausgeschnittene Längsränder (13) durch einen Streifen (14) des Körpers getrennt sind.

**Claims**

1. A pivot hinge of a sun-visor, of the type comprising a hinge body (1) having a generally U-shaped defining a bearing (4) for a support arm (18) and a housing for a spring strip (2) which, at rest, projects into the bearing, said housing including walls (10; 25) which laterally retain the spring strip, characterized in that said housing includes bosses (16; 26) for retaining the spring strip in at least one of two other longitudinal and transverse directions, these bosses being so dimensioned as to be capable of being passed through by the spring strip by a resilient spreading apart of the two branches of the U.

2. A hinge according to claim 1, characterized in that said bosses (16; 26) are provided in said lateral retaining walls (10; 25).

3. A hinge according to claim 2, characterized in that the spring strip (2) is bowed.

4. A hinge according to claim 3, characterized in that the ends of the spring strip are bent in that shape of hooks (15) and said bosses (16) are pointed elements projecting into these hooks.

5. A hinge according to claim 3, characterized in that the two branches of each hook (15) are roughly parallel to each other.

6. A hinge according to any one of the claims 1 to 5, characterized in that said housing extends throughout the length of the body (21) so as to form an elongate case whose wall (23) opposed to bearing portions (24) of the spring strip (2) is curved and thereby forms a part of the bearing (4).

7. A hinge according to claim 6, characterized in that the lateral walls (25) of the housing each include two bosses (26) which are parallel to the branches of the U and longitudinally retain the spring strip (2).

8. A hinge according to any one of the claims 1 to 7, characterized in that the housing of the body (1; 21) is defined on the side opposed to the bearing (4) by surface portions (9; 24) which are produced by forming in the body (1; 21) and extend outwardly in a common plane and on which the spring strip (2) slidably bears.

9. A hinge according to claim 8, characterized in that said surface portions are formed by tabs (9) which are cut-out and outwardly bent.

10. A hinge according to claim 9, characterized in that the tabs (9) define in the body (1) two openings (11) whose longitudinal cut-out edges (13) are separated by a strip (14) of the body.

FIG.1

FIG.2

# FIG.3